# EUROPEAN PATENT APPLICATION

(11) **EP 3 000 947 A1**
(43) Date of publication of application: **30.03.2016**
(21) Application number: 15189513.3
(22) Date of filing: 31.01.2012
(51) Int. Cl.: E04D 3/36, E04D 5/14, E04F 13/08, F16B 13/00

(54) **A KIT FOR FASTENING A LAYER OF INSULATING MATERIAL TO A SUPPORT**

(62) Divisional of application: 12153338.4
(71) Applicant: Icopal Danmark A/S, 2730 Herlev (DK)
(72) Inventor: Olsen, John Ejrup, 2200 Copenhagen N (DK); Jensen, Eirik Sandberg, 4000 Roskilde (DK)
(74) Representative: Plougmann Vingtoft a/s

(57) **Abstract**

A kit (400) for fastening a layer of insulating material (40) to a support (41), comprising a first tubular member (410) with a first end for penetrating into the insulating material and for being fastened to the support by means of a screw received in the tubular member, and a second tubular member (420) with a second end opposite the first end and a flange at the second end for abutting a surface of the insulating material. The tubular members are movable relative to each other in an axial direction with an adjustable total length. The tubular members are interconnected by one or more elongate flexible members (430) extending from the first tubular member and having a free end received in an opening (423) in the second tubular member. Retaining means comprising a resilient locking member cooperating with a series of indentations on the flexible members prevent the one or more free ends from being withdrawn from the respective openings.

The first and the second tubular members are interconnected by one or more elongate flexible members each with a free end of the one or more elongate flexible members extending from the first tubular member and receivable in respective openings in the second tubular member with retaining means preventing the one or more free ends from being withdrawn from the respective openings, and the retaining means comprise resilient locking member cooperating with a series of indentations on the flexible members.

## Description

### FIELD OF THE INVENTION

The invention relates to fastening devices used in building industry for fastening a layer of insulating material to a support having a tubular member with a first end for penetrating into the insulating material and for being fastened to the support by means of a screw received in the tubular member, and a second end opposite the first end with a flange at the second end for abutting a surface of the insulating material and fastening the insulating material to the support. Typically, the support is part of an outer structural component of a building such as a roof construction which is thermally insulated by a layer of insulating material, so-called warm roof constructions. The outer surface of the insulating material will typically be covered by a roofing membrane.

### BACKGROUND OF THE INVENTION

An existing fastening device comprises a single tubular member of a fixed length and with a first end for penetrating into the insulating material and for being fastened to the support by means of a screw received in the tubular member, and a second end opposite the first end, and a flange at the second end for abutting a surface of the insulating material and thereby holding the insulating material in place.

Often mineral wool is used as the insulating material, and the layer of mineral wool will have a thickness varying between some tens of millimetres to several hundred millimetres. Used as roof insulation the insulating layer may have to bear and withstand the weight of one or more persons on the roof, and since mineral wool is not completely rigid but more or less resilient, it will yield under the load and be compressed.

The known fastening device therefore has a total length smaller than the thickness of the layer of insulating material. When the known fastening device has penetrated into the layer of insulating material so that the flange at its second end abuts the surface of the insulating material, its first end will not reach the supporting structure but be at a distance therefrom. This ensures that if e.g. a person steps on the outer roofing membrane immediately above the flange of the fastening device at its second end, the flange of the fastening device will compress the layer of insulating material and the first end of the fastening device will thus penetrate further into the insulating material. This prevents the second end of the fastening device from damaging and possibly penetrating or puncturing the covering roofing membrane. In order to cover a large range of thicknesses of the insulating material varying between some tens of millimetres to several hundreds of millimetres fastening devices are today manufactured in a corresponding large variety of lengths, and/or screws with a corresponding variety of lengths are used.

US 5907938 discloses a fastening device with two tubular parts with cooperating threaded portions whereby the total length of the fastening device is adjustable.

DE 19840521 C1 discloses a fastening device with two tubular parts with ribs and grooves forming a non-return ratchet structure whereby the total length of the fastening device is adjustable.

It is an object of the invention to provide a fastening device that can be used with a range of thicknesses of the layer of insulating material and which in a simple manner can be adjusted to the actual thickness.

### SUMMARY OF THE INVENTION

The invention provides a fastening device for fastening a layer of insulating material to a support, comprising a first tubular member with a first end for penetrating into the insulating material and for being fastened to the support by means of a screw received in the tubular member, and a second tubular member with a second end opposite the first end and a flange at the second end for abutting a surface of the insulating material. The tubular members are movable relative to each other in an axial direction with an adjustable total length. The tubular members are interconnected by one or more elongate flexible members extending from the first tubular member and having a free end received in an opening in the second tubular member. Retaining means comprising a resilient locking member cooperating with a series of indentations on the flexible members prevent the one or more free ends from being withdrawn from the respective openings.

Such a fastening device allows fast and easy adjustment of the total length to a range of thicknesses of the layer of insulating material, and the total length of each fastening device can be adjusted to several lengths, whereby fewer sizes are needed. Each fastening device can be manually adjusted according to actual need e.g. on the location of use or pre-adjusted by machine during the manufacturing process.

### BRIEF DESCRIPTION OF THE DRAWINGS

Figure 1 shows a first fastening device in use for fastening a layer of insulating material to a support;
Figure 2 shows a second fastening device in use for fastening a layer of insulating material to a support;
Figure 3 shows a third fastening device in use for fastening a layer of insulating material to a support;
Figures 4A and 4B show a fastening device in use for fastening a layer of insulating material to a support; and
Figures 5A and 5B show details of a variation of the fastening device in figures 4A and 4B.

### DETAILED DESCRIPTION OF THE INVENTION

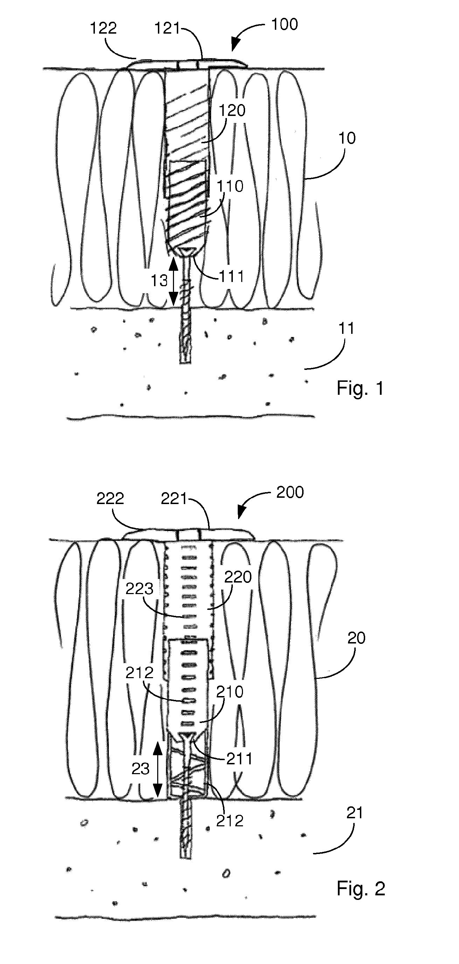

In figure 1 is shown a fastening device 100 with a first tubular member 110 with a first end 111, and a second tubular member 120 with a second end 121 opposite the first end 111 and a flange 122 at the second end 121. The first tubular member 110 and the second tubular member 120 have matching external and internal threads respectively by means of which the axial position of the first tubular member 110 relative to the second tubular member 120 can be adjusted whereby the total length of the fastening device 100 can be adjusted.

The fastening device 100 is shown in a position of use where it has penetrated into a layer of insulating material 10 such as mineral wool, and a screw 12 is received within the fastening device 100 and protrudes through a hole in the first end 111 of the first tubular member 110. The screw has a head of a size preventing the head from slipping through the hole, and the hole has a diameter allowing the first tubular member 110 to slide along the shaft of the screw. The screw is screwed into a support 11 such as roof construction to a depth where the flange 122 abuts the free surface of the insulating material 10.

The length of the fastening device 100 is adjusted by rotating the first and second members 110, 120 relative to each other so that the total length of the fastening device 100 is shorter than the thickness of the layer of insulating material 10 and leaves a distance 13 between the first end 111 and the support 11. A membrane such as a roofing membrane (not shown) will normally be arranged on the free surface of the insulating material 10. The threads on the first and second tubular members have a pitch and/or a friction which prevent undesired relative movement.

The first tubular member 110 can have a length than may even exceed the thickness of the layer of insulating material 10. When the first tubular member has penetrated the insulating material and fastened to the support 11 as shown in figure 1 a portion of the first tubular member will protrude out of the insulating material. The tubular portion of the second tubular member may then have a short length, and its opening in the flange 122 may be large enough to allow the first tubular member to pass through. The second tubular member can then be assembled with the first tubular member by engagement of their threads, and the second tubular member can thereby be brought into appropriate contact with the free surface of the insulating material. The portion of the first tubular member, if any, that protrudes beyond the second tubular member will then have to be removed, e.g. by cutting.

In figure 2 is shown another fastening device 200 with a first tubular member 210 with a first end 211, and a second tubular member 220 with a second end 221 opposite the first end 211 and a flange 222 at the second end 221.

The first and second tubular members 210 and 220 have cooperating protrusions and indentations 212, 223. The length of the fastening device 200 can be adjusted by pulling or pushing the first and second tubular members relative to each other in their axial direction. The protrusions and indentations define a plurality of stable relative positions identified by a tactile and/or audible click caused by engagement of the protrusions and indentations.

Like in figure 1 the fastening device 200 is penetrated into a layer of insulating material 20 and is fastened by a screw to a support 21 with a distance 23 between the first end 211 of the first tubular member 210 and the support 21.

At the first end 21 the first tubular member has an optional deformable section 212 dimensioned to resist a predetermined load such as 30 kg and yield or possibly even collapse at a load greater than the predetermined load. Each of the described fastening devices can have such a deformable section.

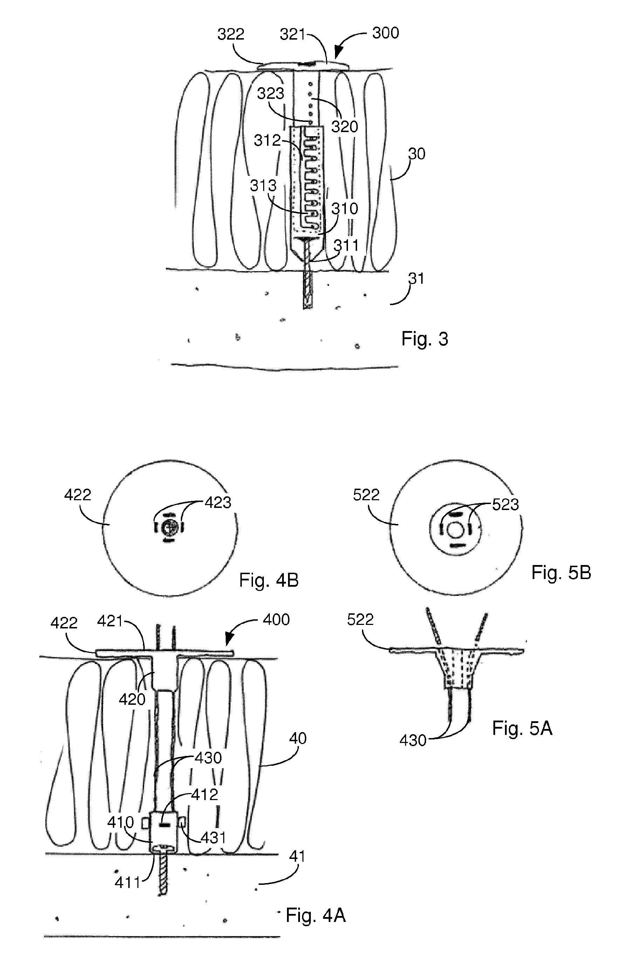

In figure 3 is shown yet another fastening device 300 with a first tubular member 310 with a first end 311, and a second tubular member 320 with a second end 321 opposite the first end 311 and a flange 322 at the second end. The first tubular member 310 has a longitudinally extending groove or slot 312 with a plurality of grooves or slots 313 extending circumferentially from the longitudinally extending groove or slot 312. The second tubular member 320 has a row of protruding beads 323. The second tubular member 320 is slideably received within the first tubular member 310 with the row of beads 323 sliding in the longitudinally extending groove or slot 312 to a relative position of the first and second tubular members where the total length of the fastening device 300 is as desired. The first and second tubular members can then be locked in this position, like a bayonet mount, by a relative rotation of the first and second tubular members so that one or more of the beads 323 enter the circumferentially extending grooves or slots 313. Insulating material 30 and support 31 are also shown.

In figure 4A is shown a further fastening device 400 with a first tubular member 410 with a first end 411, and a second tubular member 420 with a second end 421 opposite the first end 411 and a flange 422 at the second end. The first and second tubular members 410, 420 are interconnected by one or more elongate flexible members 430 - two are shown in this case. The flexible members 430 can be integral parts of the first tubular member 410 moulded as one unit, or binders known as cable binders can be used as shown where cable binders are received in openings 412 in the first tubular member 410 where the openings do not allow the heads 431 to pass through the openings. As shown in figure 4B the free ends of the flexible members 430 are received in openings 423 in the flange 422 and protrude beyond the flange. The second tubular member 420 has a locking mechanism cooperating with the flexible members 430 allowing the flexible members to be inserted in the openings 423 and preventing them from being withdrawn, e.g. in the form of a resilient locking member cooperating with a series of indentations on the flexible members 430.

The first tubular member 410 is shown having penetrated through the layer of insulating material 40 and fastened directly to the support 41 by means of a screw. The total length of the fastening device 400 is adjusted by pulling the protruding free ends of the flexible members 430 through the openings 423 in the flange 422 until the flange abuts the free surface of the insulating material 40. The free ends may then be cut off.

Figures 5A and 5B show the flange 522 in an alternative version with openings 523 for receiving the ends of the flexible members 430. The central opening in the flange is larger than in figures 4A and 4B which leaves more room for cutting off the free ends below the free surface of the flange 522 so that the cut ends of the flexible members will not touch the roofing membrane.

Each of the described fastening devices lends itself to adjustment of the total length being performed manually or by machine. In each fastening device the first and second parts can have visible and/or tactile distance markings for assisting the manual adjustment of the total length. Depending on the support nails can be used instead of screws for fastening the fastening device to the support.

The fastening devices shown in figures 1, 2 and 3 allow adjustment of the total length of the fastening device with a ratio the maximum length to the minimum length of close to 2:1, whereas the fastening device in figure 4 will allow much higher ratios.

The fastening device according to the invention is preferably made by injection moulding of a suitable thermoplastic material such as PP, PA, PETP, PE, ABS, POM, PC and PVC, but metals and metal alloys can also be used.

The first and second tubular members can have any suitable cross section such as circular, elliptical, polygonal and any combination thereof.

## Claims

1. A fastening device (400) for fastening a layer of insulating material (40) to a support (41), the fastening device comprising
a first tubular member (410) with a first end (411) for penetrating into the insulating material and for being fastened to the support by means of a screw or a nail received in the tubular member, and
a second tubular member with a second end opposite the first end and a flange at the second end for abutting a surface of the insulating material (40),
the first tubular member and the second tubular member being movable relative to each other in an axial direction with an adjustable total length of the fastening device,
**characterized in that**
the first tubular member (410) and the second tubular member (420) are interconnected by one or more elongate flexible members (430), each elongate flexible member (430) extending from the first tubular member and having a free end received in an opening (423) in the second tubular member (420) with retaining means preventing the one or more free ends from being withdrawn from the respective openings (423), and the retaining means comprise a resilient locking member cooperating with a series of indentations on the flexible members (430).

2. A fastening device (400) according to claim 1 wherein the first end (411) of the first tubular member (410) has a hole for receiving a screw or a nail for fastening the fastening device to the support (41).

3. A fastening device (400) according to any one of the preceding claims wherein the first and second tubular members (410, 420) have visible and/or tactile distance markings.
